# EUROPEAN PATENT APPLICATION

(11) **EP 4 781 845 A1**
(43) Date of publication of application: **29.07.2026**
(21) Application number: 24867894.8
(22) Date of filing: 19.07.2024
(51) Int. Cl.: A24B 15/34, A24B 15/16, A24B 15/32, A24F 40/10, A24F 40/42

(54) **LIQUID COMPOSITION AND ELECTRONIC CIGARETTE**

(30) Priority: 19.09.2023 JP 2023151458
(71) Applicant: Rockvill Inc., Tokyo 104-0061 (JP)
(72) Inventor: YAMAMOTO, Tao, Tokyo 104-0061 (JP)
(74) Representative: FRKelly
(86) International application number: PCT/JP2024/025983
(87) International publication number: WO 2025/062812

(57) **Abstract**

An object of the present invention is to provide a liquid composition or the like, having an excellent stress-reducing effect. The present invention relates to a liquid composition containing an organic solvent and β-caryophyllene, in which a content of the β-caryophyllene is 0.5% to 10.0% by mass with respect to the total amount of the liquid composition.

## Description

### Technical Field

The present invention relates to a liquid composition and an electronic cigarette.

### Background Art

As an alternative to a combustible cigarette in the related art, research and development and practical application of electronic cigarettes such as a heated tobacco and a vape have been advanced. For example, Patent Literature 1 discloses an aerosol generating article including an aerosol generating substrate, in which the aerosol generating substrate contains a homogenized plant material containing clove particles, and the aerosol generating substrate contains a specific amount of eugenol, eugenol acetate, and β-caryophyllene.

### Citation List

### Patent Literature

Patent Literature 1: PCT Japanese Translation Patent Publication No. 2022-502013

### Summary of Invention

However, even when a user inhales an aerosol using the aerosol generating article disclosed in Patent Literature 1, there is no stress-reducing effect or the stress-reducing effect is insufficient.

The present invention has been made in view of the above-described problem, and an object thereof is to provide a liquid composition or the like, having an excellent stress-reducing effect.

### Solution to Problem

As a result of intensive studies to solve the above-described problem, the present inventors have found that a liquid composition containing an organic solvent and β-caryophyllene, in which a content of the β-caryophyllene is adjusted to a specific amount with respect to the total amount of the liquid composition, can solve the above-described problem, and have completed the present invention. That is, the present invention is as follows.
[1] A liquid composition containing:
   an organic solvent; and
   β-caryophyllene,
   in which a content of the β-caryophyllene is 0.5% to 10.0% by mass with respect to a total amount of the liquid composition.
[2] The liquid composition according to [1], further containing:
   a fragrance,
   in which a content of the fragrance is 0.5% to 10.0% by mass with respect to the total amount of the liquid composition.
[3] The liquid composition according to [1] or [2],
   in which the content of the β-caryophyllene is 1.0% to 5.0% by mass with respect to the total amount of the liquid composition.
[4] The liquid composition according to any one of [1] to [3],
   in which the organic solvent includes glycerol and propylene glycol,
   a content W_{g} of the glycerol is 40.0% to 70.0% by mass with respect to the total amount of the liquid composition,
   a content Wₚ of the propylene glycol is 25.0% to 55.0% by mass with respect to the total amount of the liquid composition, and
   a ratio (W_{g}/Wₚ) of the content of the glycerol W_{g} to the content Wₚ of the propylene glycol is 0.7 to 3.0.
[5] The liquid composition according to any one of [1] to [4],
   in which a boiling point is 90°C to 210°C.
[6] The liquid composition according to any one of [1] to [5],
   in which the liquid composition is substantially free of nicotine.
[7] The liquid composition according to any one of [1] to [6],
   in which the liquid composition is substantially free of cannabidiol.
[8] The liquid composition according to any one of [1] to [7],
   in which the liquid composition is used for an electronic cigarette.
[9] A liquid cartridge filled with the liquid composition according to any one of [1] to [8].
[10] An electronic cigarette including:
   the liquid cartridge according to [9].

### Advantageous Effect of Invention

According to the present invention, it is possible to provide a liquid composition or the like, having an excellent stress-reducing effect.

### Brief Description of Drawings

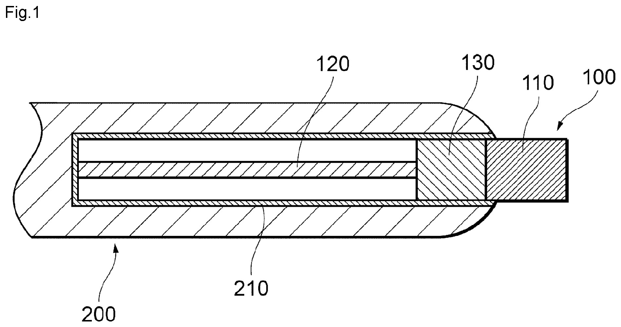

[Figure 1] Figure 1 is a view showing an example of a cross-sectional structure of an electronic cigarette.

### Description of Embodiments

Hereinafter, embodiments (hereinafter, referred to as "the present embodiments") for carrying out the present invention will be described in detail with reference to drawings as necessary. However, the present invention is not limited thereto, and various modifications are possible without departing from the gist. In the drawings, the same elements will be represented by the same reference numerals, and duplicate descriptions thereof will be omitted. Unless otherwise specifically described, the positional relationship such as up, down, left, and right will be based on the positional relationship shown in the drawings. The dimensional ratios shown in the drawings are not limited to the depicted ratios.

### 1. Liquid composition

The liquid composition according to the present embodiment (hereinafter, also simply referred to as "liquid composition") is a liquid composition containing an organic solvent and β-caryophyllene, in which a content of the β-caryophyllene is 0.5% to 10.0% by mass with respect to the total amount of the liquid composition.

Since the liquid composition according to the present embodiment contains an organic solvent and β-caryophyllene, and has a content of the β-caryophyllene of 0.5% to 10.0% by mass with respect to the total amount of the liquid composition, a stress-reducing effect is exhibited. When the content of the β-caryophyllene exceeds 10.0% by mass with respect to the total amount of the liquid composition, not only the stress-reducing effect but also a negative side effect such as an excitatory effect may be exhibited. In addition, when the content of the β-caryophyllene is less than 0.5% by mass with respect to the total amount of the liquid composition, the stress-reducing effect is not exhibited or a degree of the effect is extremely low. On the other hand, it is considered that the stress-reducing effect of the β-caryophyllene is appropriately exhibited by being within an appropriate concentration range.

A boiling point of the liquid composition according to the present embodiment is preferably 90°C to 210°C, more preferably 100°C to 200°C, and still more preferably 110°C to 190°C. When the boiling point of the liquid composition is within the above-described range, when the liquid composition is applied to an electronic cigarette, it is possible to generate an appropriate amount of vapor at an appropriate temperature, and it is possible to further improve the stress-reducing effect while reducing power consumption.

The liquid composition according to the present embodiment is preferably used for an electronic cigarette. In the present embodiment, the electronic cigarette is a cigarette other than the combustible cigarette in the related art, and is not particularly limited, and for example, includes a heated tobacco, a vape, an electronic shisha, and an electronic pipe. In the present embodiment, the combustible cigarette refers to a cigarette in which smoke is generated by burning tobacco leaves or the like. In addition, in the present embodiment, the heated tobacco refers to a cigarette in which vapor is generated by heating tobacco leaves or the like with electricity. In addition, the vape refers to a cigarette in which vapor is generated by heating, with electricity, a substance that is liquid at room temperature (25°C) and 1 atm.

Hereinafter, each component of the liquid composition according to the present embodiment will be described in detail.

### 1.1. Organic solvent

The liquid composition according to the present embodiment contains an organic solvent. As the organic solvent, an organic solvent having low toxicity to the human body is preferable, and glycerol or propylene glycol is more preferable.

When the liquid composition according to the present embodiment contains glycerol as the organic solvent, a content of the glycerol is preferably 40.0% to 70.0% by mass, more preferably 42.5% to 67.5% by mass, and still more preferably 45.0% to 65.0% by mass with respect to the total amount of the liquid composition.

When the liquid composition according to the present embodiment contains propylene glycol as the organic solvent, a content of the propylene glycol is preferably 25.0% to 55.0% by mass, more preferably 27.5% to 52.5% by mass, and still more preferably 30.0% to 50.0% by mass with respect to the total amount of the liquid composition.

When the liquid composition according to the present embodiment contains glycerol and propylene glycol as the organic solvent, a ratio (W_{g}/Wₚ) of the content Wg of the glycerol to the content Wₚ of the propylene glycol is preferably 0.7 to 3.0, more preferably 0.8 to 2.5, still more preferably 0.9 to 2.0, even more preferably 1.0 to 1.9, and particularly preferably 1.1 to 1.7. When W_{g}/Wₚ is within the above-described range, a viscosity of the liquid composition is within an appropriate range, and when the liquid composition is applied to an electronic cigarette, a supply speed of the liquid to an atomizer (spraying device) tends to be appropriate.

### 1.2. β-Caryophyllene

The liquid composition according to the present embodiment contains β-caryophyllene. A content of the β-caryophyllene is 0.5% to 10.0% by mass with respect to the total amount of the liquid composition. In addition, the content of the β-caryophyllene is preferably 0.7% to 7.5% by mass, more preferably 1.0% to 5.0% by mass, and still more preferably 1.5% to 4.5% by mass with respect to the total amount of the liquid composition. When the content of the β-caryophyllene is within the above-described range, the stress-reducing effect of β-caryophyllene tends to be appropriately exhibited.

### 1.3. Fragrance

The liquid composition according to the present embodiment may contain a fragrance. In the present embodiment, the β-caryophyllene is not included in the fragrance. As the fragrance, any suitable fragrance that imparts a desired scent can be used, and a commercially available fragrance may be used. More specifically, examples thereof include fruit flavors such as an apple flavor and a lemon flavor, and a mint flavor, but the fragrance is not particularly limited thereto. Such a fragrance is not particularly limited, and examples thereof include acetic esters such as isopentyl acetate, ethyl acetate, cis-3-hexenyl acetate, and geranyl acetate; butyric esters such as ethyl 2-methylbutyrate and isopentyl butyrate; monoterpenes such as linalool, cis-linalool oxide, and nerol; vanilloids such as vanillin and ethyl vanillin; lactones such as γ-octalactone; maltols such as maltol and ethyl maltol; methyl dihydrojasmonate; cyclotene; cis-3-hexenol; and (R)-(-)-carvone.

A content of the fragrance is not particularly limited, but for example, is 0.5% to 10.0% by mass, 1.0% to 8.0% by mass, 1.5% to 8.0% by mass, or 2.5% to 7.5% by mass with respect to the total amount of the liquid composition.

### 1.4. Water

The liquid composition according to the present embodiment may or may not contain water. When the liquid composition contains water, a content of the water is not particularly limited, but for example, is 5.0% to 50.0% by mass, 10.0% to 45.0% by mass, or 15.0% to 40.0% by mass with respect to the total amount of the liquid composition.

### 1.5. Other additives

The liquid composition according to the present embodiment may contain other additives, in addition to the above-described components. The other additives are not particularly limited, and examples thereof include a sweetener, a natural flavoring agent, an artificial flavoring agent, a colorant, an antioxidant, a preservative, a chelating agent, a viscosity modifier, a tonicity agent, a perfuming agent, an opacifier, a suspending agent, a binder, a thickener, a carrier, and a mixture thereof.

The liquid composition according to the present embodiment may contain nicotine as the other additives, but preferably is substantially free of nicotine, and more preferably does not contain nicotine at all. The fact that the liquid composition is substantially free of nicotine is not particularly limited, but for example, refers to that a content of the nicotine is 0% to 2.0% by mass, 0% to 1.5% by mass, 0% to 1.0% by mass, 0% to 0.5% by mass, or 0% to 0.1% by mass with respect to the total amount of the liquid composition.

The liquid composition according to the present embodiment may contain cannabidiol as the other additives, but preferably is substantially free of cannabidiol, and more preferably does not contain cannabidiol at all. The fact that the liquid composition is substantially free of cannabidiol is not particularly limited, but for example, refers to that a content of the cannabidiol is 0% to 2.0% by mass, 0% to 1.5% by mass, 0% to 1.0% by mass, 0% to 0.5% by mass, or 0% to 0.1% by mass with respect to the total amount of the liquid composition.

The liquid composition according to the present embodiment may contain I-menthol as the other additives. When the liquid composition contains I-menthol, a content of the I-menthol is preferably 1.0% to 15.0% by mass or 2.5% to 10.0% by mass with respect to the total amount of the liquid composition. When the content of the I-menthol is within the above-described range, a sense of stimulation (also referred to as "kick") felt when smoking the combustible cigarette in the related art, containing nicotine, tends to be improved.

The present invention also provides:
a stress-reducing method including administering the liquid composition according to the present invention;
a liquid composition according to the present invention, used for reducing stress;
β-caryophyllene according to the present invention, used for reducing stress; and
a use of β-caryophyllene according to the present invention for manufacturing the liquid composition according to the present invention.

Here, the liquid composition according to the present invention may include any of the above-described aspects.

### 2. Manufacturing method of liquid composition

A manufacturing method of the liquid composition according to the present embodiment is not particularly limited, but for example, the above-described components may be mixed. More specifically, the above-described components may be sequentially added to the above-described organic solvent and then mixed; or the fragrance and the other additives may be mixed with the above-described organic solvent to form a mixture, and then the mixture and the β-caryophyllene may be mixed.

### 3. Method of using liquid composition

As a method of using the liquid composition according to the present embodiment, it is preferable to heat the liquid composition to vaporize the liquid composition and then inhale the vaporized liquid composition. More specifically, examples thereof include a method of vaporizing the liquid composition by steaming the liquid composition with boiling water and then inhaling the vaporized liquid composition, and a method of applying the liquid composition to an electronic cigarette, but the method of using the liquid composition according to the present embodiment is not particularly limited. Among these, a method of applying the liquid composition to an electronic cigarette is preferable.

### 3.1. Electronic cigarette

The liquid composition according to the present embodiment is suitably used for an electronic cigarette. The liquid composition according to the present embodiment is preferably filled in a liquid cartridge, and the electronic cigarette preferably includes the liquid cartridge filled with the liquid composition according to the present embodiment. Figure 1 is a view showing an example of a cross-sectional structure of the electronic cigarette.

An electronic cigarette 200 according to the present embodiment includes an insertion portion 210 for inserting a liquid cartridge 100 filled with the liquid composition into the electronic cigarette 200. In addition, the liquid cartridge 100 includes a mouthpiece 110 for inhaling vapor generated by heating the liquid composition in the liquid cartridge 100, a supporting portion 120 for supporting the mouthpiece 110 and an atomizer 130, and the atomizer 130 for heating and vaporizing the liquid composition in the liquid cartridge 100. In the electronic cigarette 200, a periphery of the insertion portion 210 may be filled with an appropriate material such as a resin, or at least a part thereof may be hollow.

The electronic cigarette 200 includes a battery for supplying power to the atomizer 130; and the battery is not particularly limited, but for example, power is supplied from the battery to the atomizer 130 through the contact portion of insertion portion 210 and atomizer 130. The atomizer 130 generates heat by the supplied power, heats and vaporizes the liquid composition drawn in the liquid cartridge 100, and supplies the vapor to the mouthpiece 110. Next, the vaporized liquid composition can be inhaled through the mouthpiece 110. A temperature of the atomizer 130 when heating the liquid composition is not particularly limited, but for example, is 80°C to 110°C.

### Examples

The present invention will be described in detail by Examples and Comparative Examples. The present invention is not limited by Examples. In addition, unless otherwise specified, the operation was carried out at room temperature (25°C) and 1 atm.

### 1. Preparation of liquid composition

A mixed solution 1 was prepared by mixing 53 parts by mass of glycerol, 39 parts by mass of propylene glycol, and 5 parts by mass of an apple flavor. Thereafter, 3 parts by mass of β-caryophyllene was mixed with 97 parts by mass of the mixed solution 1 to prepare a liquid composition 1.

In addition, liquid compositions 2 to 10 were obtained by mixing the components with contents shown in Table 1. The numerical values shown in Table 1 indicate the contents, and the unit thereof is % by mass with respect to the total amount of each liquid composition. Table 2 shows the type of the flavor felt when inhaling the liquid compositions 2 to 10.

**[Table 1]**

| | Liquid composition 2 | Liquid composition 3 | Liquid composition 4 | Liquid composition 5 | Liquid composition 6 | Liquid composition 7 | Liquid composition 8 | Liquid composition 9 | Liquid composition 10 |
|---|---|---|---|---|---|---|---|---|---|
| I-Menthol | 6.3 | 5.3 | 5.0 | 5.4 | 5.5 | 5.5 | 3.9 | | 3.7 |
| Vanillin | | | | | | | | 1.6 | 0.6 |
| Ethyl vanillin | | | | | | | | 0.3 | |
| Linalool | | | 0.4 | 0.6 | 3.3 | | | | |
| Nerol | | | 0.3 | | | | | | |
| Ethyl 2-methylbutyrate | | | | 0.7 | | | | | |
| Methyl dihydrojasmonate 'cis/trans mixture) | | | | | 0.2 | | | | |
| Maltol | | | | | | 0.3 | | | |
| Ethyl maltol | | | | | | | 0.3 | 0.1 | 0.6 |
| Cyclotene | | | | | | | 0.1 | | 0.6 |
| γ-Octalactone | | | | | | | | | 0.2 |
| Ethyl acetate | | | | | | 0.5 | | | |
| Isopentyl butyrate | | 0.3 | | | | | | | |
| Isopentvl acetate | 1.1 | 1.4 | 0.3 | 0.3 | 1.0 | 0.2 | | | 0.3 |
| cis-Linalool oxide | | | | | | 0.1 | | | |
| cis-3-Hexenyl acetate | 0.6 | | | | | | | | |
| Geranyl acetate | 0.3 | | | | | 0.2 | | | |
| cis-3-Hexenol | 0.3 | | | | | | | | |
| 'R)-(-)-Carvone | 0.4 | | | | | 1.2 | 0.7 | | |
| β-Caryophyllene | 3.0 | 3.0 | 3.0 | 3.0 | 3.0 | 3.0 | 3.0 | 3.0 | 3.0 |
| Glycerol | 51.0 | 52.0 | 53.0 | 53.0 | 53.0 | 53.0 | 54.0 | 54.0 | 54.0 |
| Propylene glycol | 37.0 | 38.0 | 38.0 | 37.0 | 37.0 | 36.0 | 38.0 | 41.0 | 37.0 |

The CAS number of the compound contained in the liquid compositions 2 to 10 is shown below.
I-Menthol: 2216-51-5
Vanillin: 121-33-5
Ethyl vanillin: 121-32-4
Linalool: 78-70-6
Nerol: 106-25-2
Ethyl 2-methylbutyrate: 7452-79-1
Methyl dihydrojasmonate (cis/trans mixture): 24851-98-7
Maltol: 118-71-8
Ethyl maltol: 4940-11-8
Cyclotene: 80-71-7
γ-Octalactone: 104-50-7
Ethyl acetate: 141-78-6
Isopentyl butyrate: 106-27-4
Isopentyl acetate: 123-92-2
cis-Linalool oxide: 5989-33-3
cis-3-Hexenyl acetate: 3681-71-8
Geranyl acetate: 105-87-3
cis-3-Hexenol: 928-96-1
(R)-(-)-Carvone: 6485-40-1
β-Caryophyllene: 87-44-5
Glycerol: 56-81-5
Propylene glycol: 57-55-6

**[Table 2]**

| | Liquid composition 2 | Liquid composition 3 | Liquid composition 4 | Liquid composition 5 | Liquid composition 6 | Liquid composition 7 | Liquid composition 8 | Liquid composition 9 | Liquid composition 10 |
|---|---|---|---|---|---|---|---|---|---|
| Flavor | Apple | Banana | Berry | Manao | Menthol | Muscat | Smoked | Vanilla | Bitter |

### 2. Evaluation

Three subjects A to C, who were female or male in the age of 20 to 49, evaluated sense before and after inhaling the liquid composition 1 prepared as described above. Specifically, the liquid composition 1 was inhaled as follows.

First, the liquid composition 1 was filled in a liquid cartridge. Thereafter, the liquid cartridge was mounted on a DR. VAPE manufactured by Rockvill Inc., which was an electronic cigarette, and the liquid composition 1 was vaporized and inhaled. In addition, each subject performed four or more units of inhalation per day, in which five consecutive inhalations were set to one unit. One inhalation was 1 to 5 seconds of inhalation, and an interval of the inhalation in the one unit was 15 seconds or shorter. In addition, an interval between the units was 2 hours or longer.

With regard to Table 3, in Questions 1 to 4, the subjects answered from among five options of "Very often", "Often", "Sometimes", "Rarely", and "Never". In Questions 5 to 7, the subjects answered from among five options of "Greatly improved", "Moderately improved", "Slightly improved", "Not much changed", and "Unchanged". In Question 8, the subjects answered from among five options of "I could completely quit smoking", "I was satisfied without smoking", "The number of cigarettes or the number of times I smoked decreased", "I want to continue to reduce or quit smoking in the future", and "Nothing in particular". In Question 9, the subjects freely answered.

### 3. Evaluation result

The evaluation results are shown in Table 3.

**[Table 3]**

| | | | A | B | C |
|---|---|---|---|---|---|
| Before inhaling | Question 1 | Do you usually feel stressed or irritable? | Sometimes | Very often | Often |
| | Question 2 | Do you usually feel psychologically anxious? | Often | Sometimes | Often |
| | Question 3 | Do you often wake up during night or have trouble falling asleep? | Sometimes | Never | Very often |
| | Question 4 | Do you usually smoke cigarettes with nicotine? | Never | Never | Never |
| After inhaling | Question 5 | Have you noticed any improvement in your stress or irritability compared to before inhaling? | **Slightly** improved | Moderately improved | Greatly improved |
| | Question 6 | Have you noticed any improvement in psychological anxieties compared to before inhaling? | Moderately improved | Moderately improved | Greatly improved |
| | Question 7 | Have you noticed any improvement in waking up frequently during sleep or insomnia compared to before inhaling? | Moderately improved | Unchanged | Greatly improved |
| | Question 8 | How do you feel about nicotine cigarettes compared to before inhaling? | Nothing in particular | Could completely quit smoking | Satisfied without smoking |
| | Question 9 | Have you noticed any other positive effects on your body compared to before inhaling? (open-ended question) | When I feel tired, I smoke and feel refreshed | I feel like I stay awake for a while after smoking | My head feels clearer |

From Table 3, it was found that, by inhaling the vapor of the liquid composition according to the present embodiment using the electronic cigarette, stress, irritability, and psychological anxiety could be removed, and the quality of sleep could be further improved. In addition, it was found that, by inhaling the vapor of the above-described liquid composition, various positive effects such as refreshing feeling and feeling of mental clarity were also exhibited.

Next, 93 subjects who were female or male in the age of 20 to 59 evaluated sense before and after inhaling each of the liquid compositions 2 to 10 prepared as described above. The liquid compositions 2 to 10 were inhaled in the same manner as the liquid composition 1. The evaluation results by the subjects are shown in Tables 4 to 11. The number on the upper side in each cell of each table indicates the number of people. In addition, the number on the lower side in each cell indicates the proportion of the number of people to the total number of people for each item.

**[Table 4]**

| | | Degree of stress relief | | | | |
|---|---|---|---|---|---|---|
| | | Overall | Very satisfied | Satisfied | Not satisfied | Satisfaction total |
| Overall | | 93 | 21 | 48 | 24 | 69 |
| | | 100.0 | 22.6 | 51.6 | 25.8 | 74.2 |
| Overall | Smoking status/ever-smoker | 67 | 16 | 36 | 15 | 52 |
| | | 100.0 | 23.9 | 53.7 | 22.4 | 77.6 |
| | Current smoker | 48 | 11 | 24 | 13 | 35 |
| | | 100.0 | 22.9 | 50.0 | 27.1 | 72.9 |
| | Former smoker | 19 | 5 | 12 | 2 | 17 |
| | | 100.0 | 26.3 | 63.2 | 10.5 | 89.5 |
| | Non-smoker (never smoked) | 26 | 5 | 12 | 9 | 17 |
| | | 100.0 | 19.2 | 46.2 | 34.6 | 65.4 |
| | Cigarette currently smoked/combustible cigarette | 29 | 6 | 17 | 6 | 23 |
| | | 100.0 | 20.7 | 58.6 | 20.7 | 79.3 |
| | Heated tobacco | 19 | 5 | 7 | 7 | 12 |
| | | 100.0 | 26.3 | 36.8 | 36.8 | 63.2 |
| | Primary type used/regular | 18 | 4 | 10 | 4 | 14 |
| | | 100.0 | 22.2 | 55.6 | 22.2 | 77.8 |
| | Menthol | 30 | 7 | 14 | 9 | 21 |
| | | 100.0 | 23.3 | 46.7 | 30.0 | 70.0 |
| | Smoking history/less than 10 years | 18 | 6 | 9 | 3 | 15 |
| | | 100.0 | 33.3 | 50.0 | 16.7 | 83.3 |
| | 10 years or more and less than 20 years | 12 | 2 | 6 | 4 | 8 |
| | | 100.0 | 16.7 | 50.0 | 33.3 | 66.7 |
| | 20 years or more | 18 | 3 | 9 | 6 | 12 |
| | | 100.0 | 16.7 | 50.0 | 33.3 | 66.7 |

**[Table 5]**

| | | Degree of relaxation | | | | |
|---|---|---|---|---|---|---|
| | | Overall | Very satisfied | Satisfied | Not satisfied | Satisfaction total |
| Overall | | 93 | 35 | 40 | 18 | 75 |
| | | 100.0 | 37.6 | 43.0 | 19.4 | 80.6 |
| Overall | Smoking status/ever-smoker | 67 | 28 | 27 | 12 | 55 |
| | | 100.0 | 41.8 | 40.3 | 17.9 | 82.1 |
| | Current smoker | 48 | 19 | 18 | 11 | 37 |
| | | 100.0 | 39.6 | 37.5 | 22.9 | 77.1 |
| | Former smoker | 19 | 9 | 9 | 1 | 18 |
| | | 100.0 | 47.4 | 47.4 | 5.3 | 94.7 |
| | Non-smoker (never smoked) | 26 | 7 | 13 | 6 | 20 |
| | | 100.0 | 26.9 | 50.0 | 23.1 | 76.9 |
| | Cigarette currently smoked/combustible cigarette | 29 | 11 | 13 | 5 | 24 |
| | | 100.0 | 37.9 | 44.8 | 17.2 | 82.8 |
| | Heated tobacco | 19 | 8 | 5 | 6 | 13 |
| | | 100.0 | 42.1 | 26.3 | 31.6 | 68.4 |
| | Primary type used/regular | 18 | 7 | 8 | 3 | 15 |
| | | 100.0 | 38.9 | 44.4 | 16.7 | 83.3 |
| | Menthol | 30 | 12 | 10 | 8 | 22 |
| | | 100.0 | 40.0 | 33.3 | 26.7 | 73.3 |
| | Smoking history/less than 10 years | 18 | 10 | 6 | 2 | 16 |
| | | 100.0 | 55.6 | 33.3 | 11.1 | 88.9 |
| | 10 years or more and less than 20 years | 12 | 4 | 5 | 3 | 9 |
| | | 100.0 | 33.3 | 41.7 | 25.0 | 75.0 |
| | 20 years or more | 18 | 5 | 7 | 6 | 12 |
| | | 100.0 | 27.8 | 38.9 | 33.3 | 66.7 |

**[Table 6]**

| | | Degree of mood change | | | | |
|---|---|---|---|---|---|---|
| | | Overall | Very satisfied | Satisfied | Not satisfied | Satisfaction total |
| Overall | | 93 | 38 | 41 | 14 | 79 |
| | | 100.0 | 40.9 | 44.1 | 15.1 | 84.9 |
| Overall | Smoking status/ever-smoker | 67 | 27 | 32 | 8 | 59 |
| | | 100.0 | 40.3 | 47.8 | 11.9 | 88.1 |
| | Current smoker | 48 | 17 | 23 | 8 | 40 |
| | | 100.0 | 35.4 | 47.9 | 16.7 | 83.3 |
| | Former smoker | 19 | 10 | 9 | 0 | 19 |
| | | 100.0 | 52.6 | 47.4 | - | 100.0 |
| | Non-smoker (never smoked) | 26 | 11 | 9 | 6 | 20 |
| | | 100.0 | 42.3 | 34.6 | 23.1 | 76.9 |
| | Cigarette currently smoked/combustible | 29 | 10 | 15 | 4 | 25 |
| | cigarette | 100.0 | 34.5 | 51.7 | 13.8 | 86.2 |
| | Heated tobacco | 19 | 7 | 8 | 4 | 15 |
| | | 100.0 | 36.8 | 42.1 | 21.1 | 78.9 |
| | Primary type used/regular | 18 | 5 | 10 | 3 | 15 |
| | | 100.0 | 27.8 | 55.6 | 16.7 | 83.3 |
| | Menthol | 30 | 12 | 13 | 5 | 25 |
| | | 100.0 | 40.0 | 43.3 | 16.7 | 83.3 |
| | Smoking history/less than 10 years | 18 | 12 | 5 | 1 | 17 |
| | | 100.0 | 66.7 | 27.8 | 5.6 | 94.4 |
| | 10 years or more and less than 20 years | 12 | 2 | 8 | 2 | 10 |
| | | 100.0 | 16.7 | 66.7 | 16.7 | 83.3 |
| | 20 years or more | 18 | 3 | 10 | 5 | 13 |
| | | 100.0 | 16.7 | 55.6 | 27.8 | 72.2 |

**[Table 7]**

| | | Refreshing feeling | | | | |
|---|---|---|---|---|---|---|
| | | Overall | Very satisfied | Satisfied | Not satisfied | Satisfaction total |
| Overall | | 93 | 26 | 48 | 19 | 74 |
| | | 100.0 | 28.0 | 51.6 | 20.4 | 79.6 |
| Overall | Smoking status/ever-smoker | 67 | 19 | 37 | 11 | 56 |
| | | 100.0 | 28.4 | 55.2 | 16.4 | 83.6 |
| | Current smoker | 48 | 13 | 25 | 10 | 38 |
| | | 100.0 | 27.1 | 52.1 | 20.8 | 79.2 |
| | Former smoker | 19 | 6 | 12 | 1 | 18 |
| | | 100.0 | 31.6 | 63.2 | 5.3 | 94.7 |
| | Non-smoker (never smoked) | 26 | 7 | 11 | 8 | 18 |
| | | 100.0 | 26.9 | 42.3 | 30.8 | 69.2 |
| | Cigarette currently smoked/combustible cigarette | 29 | 8 | 17 | 4 | 25 |
| | | 100.0 | 27.6 | 58.6 | 13.8 | 86.2 |
| | Heated tobacco | 19 | 5 | 8 | 6 | 13 |
| | | 100.0 | 26.3 | 42.1 | 31.6 | 68.4 |
| | Primary type used/regular | 18 | 7 | 8 | 3 | 15 |
| | | 100.0 | 38.9 | 44.4 | 16.7 | 83.3 |
| | Menthol | 30 | 6 | 17 | 7 | 23 |
| | | 100.0 | 20.0 | 56.7 | 23.3 | 76.7 |
| | Smoking history/less than 10 years | 18 | 7 | 8 | 3 | 15 |
| | | 100.0 | 38.9 | 44.4 | 16.7 | 83.3 |
| | 10 years or more and less than 20 years | 12 | 1 | 10 | 1 | 11 |
| | | 100.0 | 8.3 | 83.3 | 8.3 | 91.7 |
| | 20 years or more | 18 | 5 | 7 | 6 | 12 |
| | | 100.0 | 27.8 | 38.9 | 33.3 | 66.7 |

**[Table 8]**

| | | Comfort | | | | |
|---|---|---|---|---|---|---|
| | | Overall | Very satisfied | Satisfied | Not satisfied | Satisfaction total |
| Overall | | 93 | 30 | 47 | 16 | 77 |
| | | 100.0 | 32.3 | 50.5 | 17.2 | 82.8 |
| Overall | Smoking status/ever-smoker | 67 | 25 | 34 | 8 | 59 |
| | | 100.0 | 37.3 | 50.7 | 11.9 | 88.1 |
| | Current smoker | 48 | 18 | 22 | 8 | 40 |
| | | 100.0 | 37.5 | 45.8 | 16.7 | 83.3 |
| | Former smoker | 19 | 7 | 12 | 0 | 19 |
| | | 100.0 | 36.8 | 63.2 | - | 100.0 |
| | Non-smoker (never smoked) | 26 | 5 | 13 | 8 | 18 |
| | | 100.0 | 19.2 | 50.0 | 30.8 | 69.2 |
| | Cigarette currently smoked/combustible cigarette | 29 | 10 | 15 | 4 | 25 |
| | | 100.0 | 34.5 | 51.7 | 13.8 | 86.2 |
| | Heated tobacco | 19 | 8 | 7 | 4 | 15 |
| | | 100.0 | 42.1 | 36.8 | 21.1 | 78.9 |
| | Primary type used/regular | 18 | 7 | 8 | 3 | 15 |
| | | 100.0 | 38.9 | 44.4 | 16.7 | 83.3 |
| | Menthol | 30 | 11 | 14 | 5 | 25 |
| | | 100.0 | 36.7 | 46.7 | 16.7 | 83.3 |
| | Smoking history/less than 10 years | 18 | 11 | 5 | 2 | 16 |
| | | 100.0 | 61.1 | 27.8 | 11.1 | 88.9 |
| | 10 years or more and less than 20 years | 12 | 3 | 8 | 1 | 11 |
| | | 100.0 | 25.0 | 66.7 | 8.3 | 91.7 |
| | 20 years or more | 18 | 4 | 9 | 5 | 13 |
| | | 100.0 | 22.2 | 50.0 | 27.8 | 72.2 |

**[Table 9]**

| | | Ease of use | | | | |
|---|---|---|---|---|---|---|
| | | Overall | Very satisfied | Satisfied | Not satisfied | Satisfaction total |
| Overall | | 93 | 64 | 23 | 6 | 87 |
| | | 100.0 | 68.8 | 24.7 | 6.5 | 93.5 |
| Overall | Smoking status/ever-smoker | 67 | 48 | 17 | 2 | 65 |
| | | 100.0 | 71.6 | 25.4 | 3.0 | 97.0 |
| | Current smoker | 48 | 35 | 12 | 1 | 47 |
| | | 100.0 | 72.9 | 25.0 | 2.1 | 97.9 |
| | Former smoker | 19 | 13 | 5 | 1 | 18 |
| | | 100.0 | 68.4 | 26.3 | 5.3 | 94.7 |
| | Non-smoker (never smoked) | 26 | 16 | 6 | 4 | 22 |
| | | 100.0 | 61.5 | 23.1 | 15.4 | 84.6 |
| | Cigarette currently smoked/combustible cigarette | 29 | 20 | 9 | 0 | 29 |
| | | 100.0 | 69.0 | 31.0 | - | 100.0 |
| | Heated tobacco | 19 | 15 | 3 | 1 | 18 |
| | | 100.0 | 78.9 | 15.8 | 5.3 | 94.7 |
| | Primary type used/regular | 18 | 14 | 4 | 0 | 18 |
| | | 100.0 | 77.8 | 22.2 | - | 100.0 |
| | Menthol | 30 | 21 | 8 | 1 | 29 |
| | | 100.0 | 70.0 | 26.7 | 3.3 | 96.7 |
| | Smoking history/less than 10 years | 18 | 15 | 3 | 0 | 18 |
| | | 100.0 | 83.3 | 16.7 | - | 100.0 |
| | 10 years or more and less than 20 years | 12 | 8 | 4 | 0 | 12 |
| | | 100.0 | 66.7 | 33.3 | - | 100.0 |
| | 20 years or more | 18 | 12 | 5 | 1 | 17 |
| | | 100.0 | 66.7 | 27.8 | 5.6 | 94.4 |

**[Table 10]**

| | | Kindness to body | | | | |
|---|---|---|---|---|---|---|
| | | Overall | Very satisfied | Satisfied | Not satisfied | Satisfaction total |
| Overall | | 93 | 37 | 45 | 11 | 82 |
| | | 100.0 | 39.8 | 48.4 | 11.8 | 88.2 |
| Overall | Smoking status/ever-smoker | 67 | 28 | 35 | 4 | 63 |
| | | 100.0 | 41.8 | 52.2 | 6.0 | 94.0 |
| | Current smoker | 48 | 19 | 27 | 2 | 46 |
| | | 100.0 | 39.6 | 56.3 | 4.2 | 95.8 |
| | Former smoker | 19 | 9 | 8 | 2 | 17 |
| | | 100.0 | 47.4 | 42.1 | 10.5 | 89.5 |
| | Non-smoker (never smoked) | 26 | 9 | 10 | 7 | 19 |
| | | 100.0 | 34.6 | 38.5 | 26.9 | 73.1 |
| | Cigarette currently smoked/combustible cigarette | 29 | 11 | 16 | 2 | 27 |
| | | 100.0 | 37.9 | 55.2 | 69 | 93.1 |
| | Heated tobacco | 19 | 8 | 11 | 0 | 19 |
| | | 100.0 | 42.1 | 57.9 | - | 100.0 |
| | Primary type used/regular | 18 | 5 | 12 | 1 | 17 |
| | | 100.0 | 27.8 | 66.7 | 5.6 | 94.4 |
| | Menthol | 30 | 14 | 15 | 1 | 29 |
| | | 100.0 | 46.7 | 50.0 | 3.3 | 96.7 |
| | Smoking history/less than 10 years | 18 | 9 | 9 | 0 | 18 |
| | | 100.0 | 50.0 | 50.0 | - | 100.0 |
| | 10 years or more and less than 20 years | 12 | 5 | 6 | 1 | 11 |
| | | 100.0 | 41.7 | 50.0 | 8.3 | 91.7 |
| | 20 years or more | 18 | 5 | 12 | 1 | 17 |
| | | 100.0 | 27.8 | 66.7 | 5.6 | 94.4 |

**[Table 11]**

| | | Ease of inhaling | | | | |
|---|---|---|---|---|---|---|
| | | Overall | Very satisfied | Satisfied | Not satisfied | Satisfaction total |
| Overall | | 93 | 47 | 40 | 6 | 87 |
| | | 100.0 | 50.5 | 43.0 | 6.5 | 93.5 |
| Overall | Smoking status/ever-smoker | 67 | 35 | 31 | 1 | 66 |
| | | 100.0 | 52.2 | 46.3 | 1.5 | 98.5 |
| | Current smoker | 48 | 26 | 21 | 1 | 47 |
| | | 100.0 | 54.2 | 43.8 | 2.1 | 97.9 |
| | Former smoker | 19 | 9 | 10 | 0 | 19 |
| | | 100.0 | 47.4 | 52.6 | - | 100.0 |
| | Non-smoker (never smoked) | 26 | 12 | 9 | 5 | 21 |
| | | 100.0 | 46.2 | 34.6 | 19.2 | 80.8 |
| | Cigarette currently smoked/combustible cigarette | 29 | 14 | 14 | 1 | 28 |
| | | 100.0 | 48.3 | 48.3 | 3.4 | 96.6 |
| | Heated tobacco | 19 | 12 | 7 | 0 | 19 |
| | | 100.0 | 63.2 | 36.8 | - | 100.0 |
| | Primary type used/regular | 18 | 8 | 10 | 0 | 18 |
| | | 100.0 | 44.4 | 55.6 | - | 100.0 |
| | Menthol | 30 | 18 | 11 | 1 | 29 |
| | | 100.0 | 60.0 | 36.7 | 3.3 | 96.7 |
| | Smoking history/less than 10 years | 18 | 12 | 5 | 1 | 17 |
| | | 100.0 | 66.7 | 27.8 | 5.6 | 94.4 |
| | 10 years or more and less than 20 years | 12 | 7 | 5 | 0 | 12 |
| | | 100.0 | 58.3 | 41.7 | - | 100.0 |
| | 20 years or more | 18 | 7 | 11 | 0 | 18 |
| | | 100.0 | 38.9 | 61.1 | - | 100.0 |

### Industrial Applicability

Since the liquid composition of the present invention has an excellent stress-reducing effect, the liquid composition has industrial applicability as a liquid composition used for reducing stress.

### Reference Signs List

- 100: liquid cartridge
- 110: mouthpiece
- 120: supporting portion
- 130: atomizer
- 200: electronic cigarette
- 210: insertion portion

## Claims

1. A liquid composition comprising:
an organic solvent; and
β-caryophyllene,
wherein a content of the β-caryophyllene is 0.5% to 10.0% by mass with respect to a total amount of the liquid composition.

2. The liquid composition according to Claim 1, further comprising:
a fragrance,
wherein a content of the fragrance is 0.5% to 10.0% by mass with respect to the total amount of the liquid composition.

3. The liquid composition according to Claim 1,
wherein the content of the β-caryophyllene is 1.0% to 5.0% by mass with respect to the total amount of the liquid composition.

4. The liquid composition according to Claim 1,
wherein the organic solvent comprises glycerol and propylene glycol,
a content W_{g} of the glycerol is 40.0% to 70.0% by mass with respect to the total amount of the liquid composition,
a content Wₚ of the propylene glycol is 25.0% to 55.0% by mass with respect to the total amount of the liquid composition, and
a ratio (W_{g}/Wₚ) of the content of the glycerol W_{g} to the content Wₚ of the propylene glycol is 0.7 to 3.0.

5. The liquid composition according to Claim 1,
wherein a boiling point is 90°C to 210°C.

6. The liquid composition according to Claim 1,
wherein the liquid composition is substantially free of nicotine.

7. The liquid composition according to Claim 1,
wherein the liquid composition is substantially free of cannabidiol.

8. The liquid composition according to Claim 1,
wherein the liquid composition is used for an electronic cigarette.

9. A liquid cartridge filled with the liquid composition according to any one of Claims 1 to 8.

10. An electronic cigarette comprising:
the liquid cartridge according to Claim 9.
